# EUROPEAN PATENT APPLICATION

(11) **EP 0 659 342 A1**
(43) Date of publication of application: **28.06.1995**
(21) Application number: 93119474.0
(22) Date of filing: 02.12.1993
(51) Int. Cl.: A21B 7/00, A21B 1/40, A21C 1/00

(54) **Multi-purpose food treating device**

(71) Applicant: ELOOFA INDUSTRIES CO., LTD., Pa Te Hsiang, Taoyuan Hsien (TW)
(72) Inventor: Cheng, Chun-Pin, Taipei, Taiwan (CN)
(74) Representative: Grünecker, Kinkeldey, Stockmair & Schwanhäusser Anwaltssozietät

(57) **Abstract**

A food treating device (100) includes an outer housing (A) fixed on a base (D), an inner housing (B) disposed inside the outer housing (A) in a spaced manner with a heater (H) mounted on the inner housing (B) for heating food disposed therein, a stirring rod (R) rotatably mounted in the inner housing (B) and drivingly coupled to a motor (M) to be driven thereby via a transmission belt (C) and a blower fan (F) disposed outside the housings to provide air circulation inside the outer housing (A). A control circuit (300) is provided to control the operation of the food treating device (100) in an automatic manner. The control circuit includes a central processing unit (CPU) having electrically connected thereto a power supply (3) which receives an external alternating current (AC) power and provides direct current (DC) outputs, an interrupt signal (1) generator which receives an AC signal from the power supply and provides an interrupt signal of the frequency of the AC signal to synchronizing the CPU, a temperature detector (2) which has a thermal sensor (21) for detecting the temperature of the housing, a blower controller (4) for controlling the blower fan (F), a heater controller (5) for controlling the heater (H), a motor controller (6) for controlling the motor (M), a key input circuit comprising a number of input keys to allow a user to control the food treating device (100) a display for displaying message thereon and a warning buzzer (BZ).

## Description

### FIELD OF THE INVENTION

The present invention relates generally to a food cooking device and in particular to an automatic bread baking device.

### BACKGROUND OF THE INVENTION

Kitchen appliances for cooking food generally have only single function. For example, a bread baking device can only be used to bake breads and cannot be used to prepare jam or cook rice so that there is required a number of different function appliances in a kitchen for preparing food in different ways. This obviously increases the cost and may be quite inconvenient in doing cooking.

It is therefore desirable to provide a multi-purpose food treating device for preparing foods in different ways according the settings selected by a user to allow food to be prepared or treated in an automatic manner.

### SUMMARY OF THE INVENTION

The principal objective of the present invention is to provide a multi-purpose food treating device which is capable to bake breads and cakes, making jam and cooking rice.

It is another objective of the present invention to provide a multi-purpose food treating device which comprises a control panel to allow a user to set the operation cycle of the food treating device.

To achieve the above objectives, there is provided a food treating device comprising an outer housing fixed on a base, an inner housing disposed inside the outer housing in a spaced manner with a heater mounted on the inner housing for heating food disposed therein, a stirring rod rotatably mounted in the inner housing and drivingly coupled to a motor to be driven thereby via a transmission belt and a blower fan disposed outside the housings to provide air circulation inside the outer housing. A control circuit is provided to control the operation of the food treating device in an automatic manner. The control circuit comprises a central processing unit (CPU) having electrically connected thereto a power supply which receives an external alternating current (AC) power and provides direct current (DC) outputs, an interrupt signal generator which receives an AC signal from the power supply and provides an interrupt signal of the frequency of the AC signal to synchronising the CPU, a temperature detector which has a thermal sensor for detecting the temperature of the housing, a blower controller for controlling the blower fan, a heater controller for controlling the heater, a motor controller for controlling the motor, a key input circuit comprising a number of input keys to allow a user to control the food treating device, a display for displaying message thereon and a warning buzzer.

### BRIEF DESCRIPTION OF THE DRAWING

The present invention will be better understood from the following description of a preferred embodiment of the present invention, with reference to the attached drawings, wherein
Fig. 1 is a cross-sectional view showing a food treating device constructed in accordance with the present invention;
Fig. 2 is a plan view showing a control panel arrangement of the cooking device of the present invention;
Fig. 3 is a functional block diagram of the present invention; and
Figs. 4 and 5 are circuit diagrams of the present invention.

### DETAILED DESCRIPTION OF THE PREFERRED EMBODIMENT

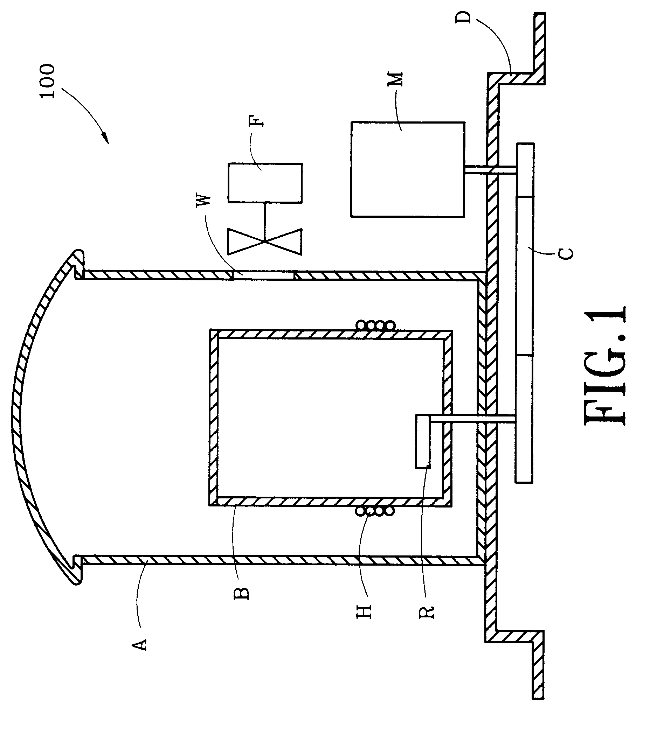

With reference to the drawings and in particular Fig. 1, wherein a food treating device constructed in accordance with the present invention, generally designated with the reference numeral 100, is shown, the food treating device 100 comprises a base D on which an outer housing A is fixed. An inner housing B is secured inside the outer housing A in a spaced manner with heating means, preferably an electrical heater H, disposed inside the outer housing A and around the inner housing B.

Blower means, such as a fan F, is disposed outside the outer housing A to blow fresh air into the outer housing A from an opening W formed on the outer housing A to provide air circulation inside the outer housing A. Driving means, such as an electrical motor M, is provided to rotate stirring means, such as a stirring rod R, via transmission means disposed therebetween, such as a transmission belt C.

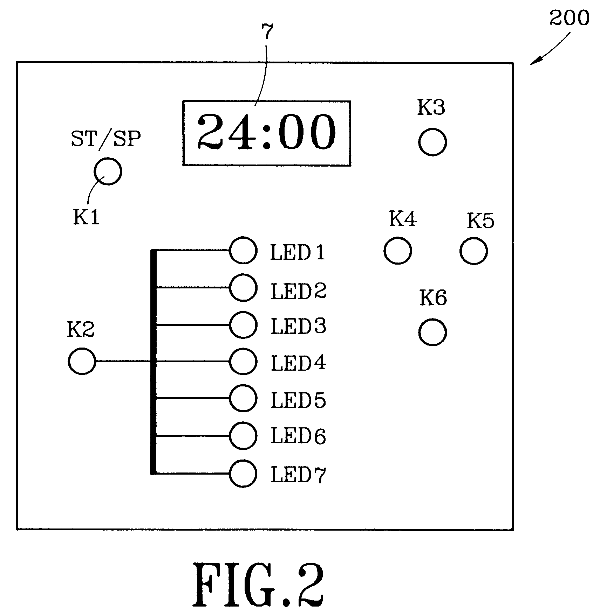

Preferably, there is provided a casing (not shown) to enclose the food treating device 100 for easy to install and ready to use. A control panel 200 (see Fig. 2) may be provided on the casing to allow a user to control the operation of the food treating device 100.

As shown in Fig. 2, a preferred embodiment of the control panel 200 may comprise a start/stop (ST/SP) key or switch for starting and/or stopping the operation of the food treating device 100, a mode selection key K2 for allowing a user to set or select a desired operation mode indicated by one of seven indicators, preferably light emitting diodes (LED) designated by LED1-LED7 in the drawings, each of which indicators LED1-LED7 designates a different operation mode that the food treating device 100 can perform, such as light baking, medium baking, dark baking (all for bread baking), manual operation, cake baking, jam making and rice cooking, a timer control key K3 for setting and controlling timer means which may be shown on a display 7, preferably a seven-segment display, which timer controls the operation cycle of the food treating device 100, two clock controlling keys K4 (hour) and K5 (minute) for setting and controlling hour and minute digits shown on the display 7 and an operation cancel key K6.

It is understood that the above-described arrangement of the control panel 200 is only an example and that other arrangements may also be adopted provided that they provide the same control function of the present invention.

It is also understood from the arrangement of the seven indicators LED1-LED7 that there are provided four different food treating functions, including bread and cake baking, rice cooking and jam making. The bread baking is further divided into three different baking processes, including light baking, medium baking and dark baking. The following is a list of the operation cycle for each of the these seven different operation modes:

| operation cycle | light baking | medium baking | dark baking | manual | cake & jam | rice cooking |
|---|---|---|---|---|---|---|
| stir (min) | 10 | 10 | 10 | 10 | 5/50 | |
| pause (min) | 5 | 5 | 5 | 5 | 10 | |
| stir (min) | 15 | 15 | 15 | 15 | 5 | |
| pause (min) | 20 | 20 | 20 | 20 | | |
| stir (sec) | 4 | 4 | 4 | 4 | | |
| ferment (min) | 55 | 55 | 55 | | | |
| heat (min) | 33 | 40 | 47 | | 85 | 20 |
| total time | 2 hr 25 min 4 sec | 2 hr 18 min 4 sec | 2 hr 32 min 4 sec | 50 min 4 sec | 105/50 min | 20 min |

It can be seen from the above Table that the operation cycles may comprise in combination a stirring process, a fermentation process and a heating process. For bread baking, the operation cycle comprises a stirring process wherein dough for making breads is first stirred for 10 minutes, stop stirring for 5 minutes, stirred again for 15 more minutes, stop stirring for 20 minutes and then further stirred for 4 seconds. The so stirred dough is then left for fermentation for 55 minutes and then heated for 33, 40 or 47 minutes, depending upon the required baking result of the breaks, such as light, medium and dark.

For manual operation, it comprises only stirring process which is listed in the Table in detail.

For cake baking and jam making, the operation cycle comprises stirring and heating which is respectively listed in the Table.

The last operation mode in the Table is rice cooking which comprises heating process (20 minutes) only, for in cooking rice, no stirring and fermentation are required.

An example of the operation of the food treating device 100 will be given. To start an operation cycle, use the mode selection key K2 to select the desired one from the seven modes and lightening the corresponding indicators, for example LED3. In this case, the operation mode is the dark bread baking which performs the procedure listed in the Table, namely stirring the dough for three times with intermittent pauses inbetween. The dough is then left for fermentation. Thereafter, heat is provided by the heater means H for baking the dough.

If a user selects the last mode, LED7, the stirring and fermentation processes are skipped and the food disposed inside the inner housing B is heated directly for 20 minutes.

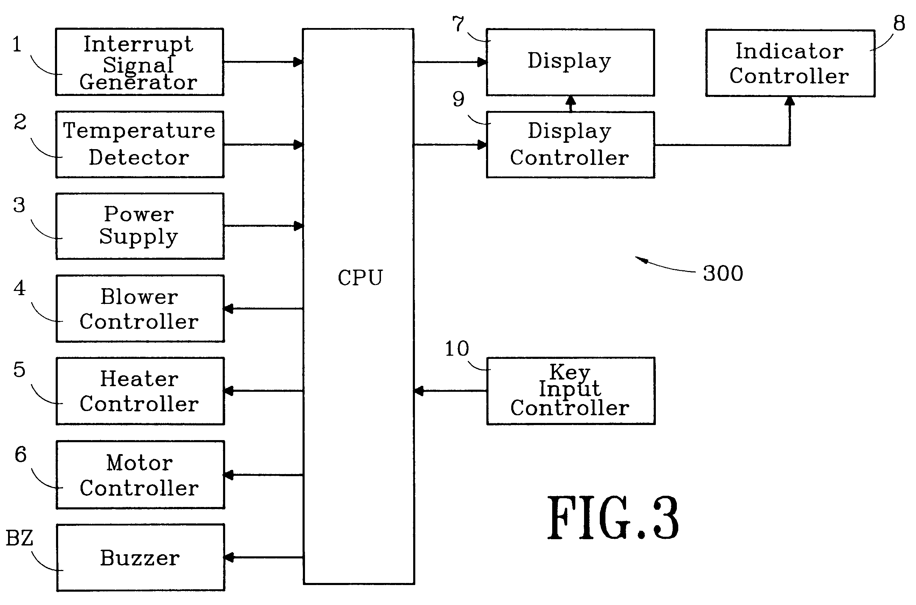

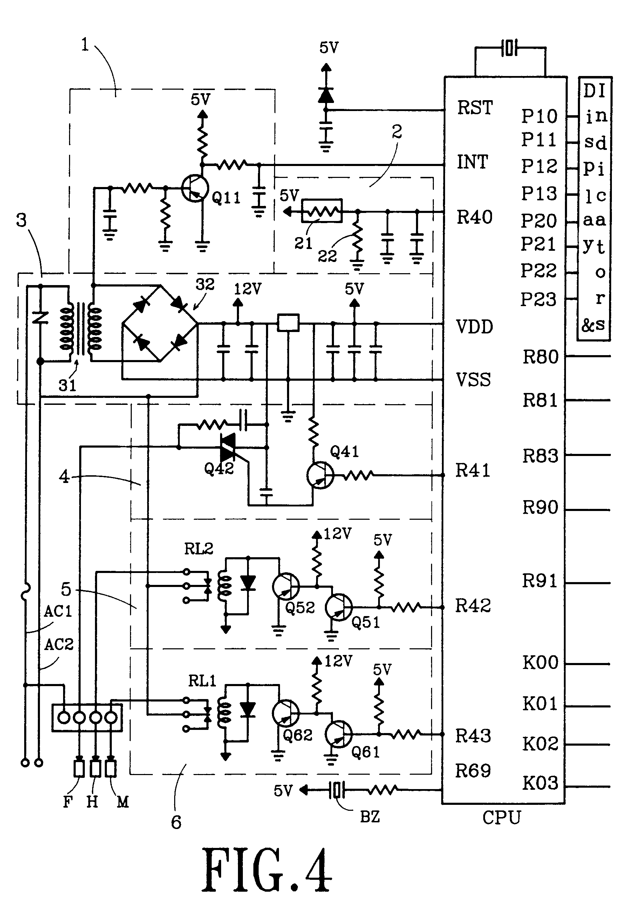

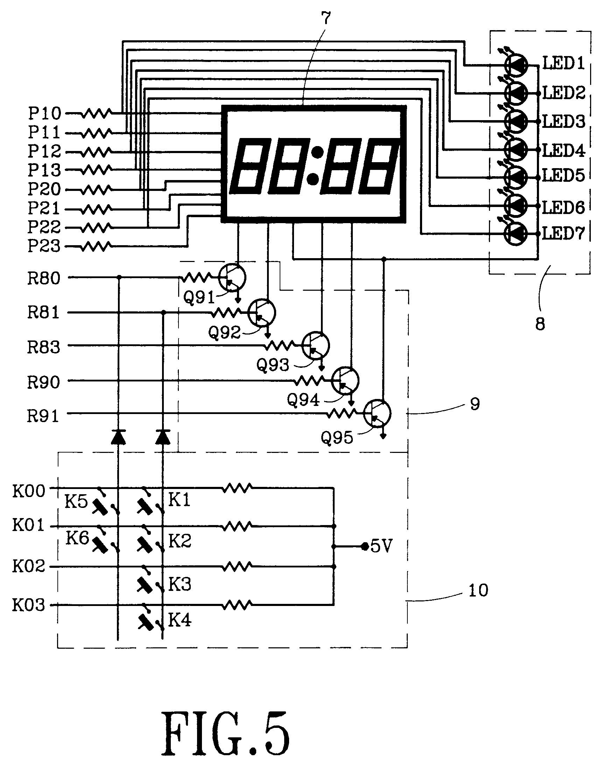

Fig. 3 shows an embodiment of the functional block of a control circuit 300 of the food treating device 100 of the present invention, the corresponding circuit diagram thereof being illustrated in Figs. 4 and 5.

As shown in Fig. 3, the control circuit 300 of the present invention comprises a central processing unit (CPU) having electrically connected thereto an interrupt signal generator 1, a temperature detector 2, a power supply 3, a blower controller 4, a heater controller 5, a motor controller 6, the display 7, an indicator controller 8, a display controller 9 associated with the display 7, an key input controller 10 and, preferably, a buzzer BZ. The CPU controls the operation and actuation of these circuits 1-10 and BZ to receive signals therefrom, process the received signals, send control signals thereto to control the operation of the whole device 100.

With particular reference to Figs. 3-5, the control circuit 300 of the present invention will be discussed. The central processing unit CPU may comprises a single chip microprocessor, such as chip code TMP47C440AN provided by Toshiba Co., Japan, of which the pins are defined as follows:
- RST:: reset
- INT:: interrupt
- R40:: temperature detector analog signal input
- VDD:: power supply terminal
- VSS:: power supply terminal
- R41:: blower control
- R42:: heater control
- R69:: buzzer control
- P10-P13, P20-P23:: display signal output
- R80, R81, R83, R90:: display scanning signal output
- R91:: indicator control
- K00-K03:: key input
The power supply circuit 3 serves to provide electrical power of desired voltages, such direct current (DC) 5V and 12V to the whole device. An example of the power supply circuit 3 comprises a transformer 31, a bridge rectifier 32 and a voltage regulator (7805). External power, such as alternating current (AC) from a wall outlet, is applied to the power supply circuit 3 via wires AC1 and AC2. The power is then transferred to the transformer 31 and then to the bridge rectifier 32 to provide a DC 12V output voltage. The 12V output may be further processed by the voltage regulator to provide a DC 5V output voltage. As is known in the electronic and electrical industries, the DC 5V voltage is used to drive electronic parts and to apply to the VDD pin of the CPU while the DC 12V voltage is to supply to relays and driving circuits.

The temperature detector 2 serves to provide temperature detection of the cooking temperature of the food treating device 100. The temperature detector circuit 2 comprises a thermal sensor 21 which, although not explicitly shown in the drawings but quite apparently, is disposed inside the outer housing A or the inner housing B for detecting the temperature thereof. The thermal sensor 21 which receives a 5V DC voltage may generate an analog temperature signal which is applied to pin R40 of the CPU via a dividing resistor 22. The analog temperature signal is divided by the dividing resistor 22 and the divided signal is then applied to R40 pin of the CPU.

The motor controller circuit 6 is to control the operation of the motor M which is to rotate, via the transmission belt C, the stirring rod R within the inner housing B. The motor controller circuit 6 receives a signal from the CPU via pin R43. The signal is processed by a Darlington circuit constituted by two transistors Q61 and Q62 to control a relay RL1 which in turn controls the ON/OFF state of the motor M.

The heater controller circuit 5 is to control the operation of the heater H which is mounted on the inner housing B and thus provides a high temperature to the inner housing B to cook the food inside the inner housing B. Similar to the motor controller circuit 6, the heater controller circuit 5 receives a signal from the CPU via pin R42. The signal is processed by a Darlington circuit constituted by two transistors Q51 and Q52 to control a relay RL2 which in turn controls the ON/OFF state of the heater H.

The blower controller circuit 4 is to control the operation of the blower fan F to supply air into the outer housing A and to cause air to circulate inside the outer housing A so as to provide a uniform temperature distribution inside the outer housing A. The blower controller circuit 4 receives a signal from the CPU via pin R41 which is processed by a fan driving circuit constituted by a transistor Q41 and a triac Q42 to control the operation of the blower fan F.

The interrupt signal generator 1 provides an interrupt signal to the CPU for synchronizing the CPU with the frequency of the external AC power source. The interrupt signal generator 1 comprises a transistor Q11 of which the base is connected the secondary winding of the transformer 31 of the power supply circuit 3. Due to the fact that AC signal existing in the secondary winding of the transformer 31 has a frequency exactly the same as that of the external AC power applied to the power supply circuit 3 (for example, 50 Hz or 60 Hz), the interrupt signal generator 1 sends out a series of pulses of such a frequency to the INT pin of the CPU to synchronize the CPU with such a frequency.

The provision of the display 7 is to allow the user to monitor the operation of the food treating device 100. In the illustrated embodiment which is a seven-segment display, scanning method is adapted to display messages on the display 7, namely display control signals from output pins R80, R81, R83 and R90 of the CPU are respectively and sequentially applied to transistors Q91-Q94 of the display controller circuit 9 so as to sequentially enable the four digit units of the seven segment display. The display signal to the four digit units are transmitted from pins P10-P13 and P20-P23 of the CPU to show desired messages on the display 7.

The seven LED indicators LED1-LED7 of the indicator controller circuit 8 are respectively connected to pins P10-P13 and P20-P22 to receive signals from the CPU. Under this situation, a switch, which in this case is a transistor Q95, is provided to switch between the display 7 and the indicator controller circuit 8. This transistor Q95 is connected to pin R91 of the CPU and controlled thereby.

An example of the operation of the transistor Q95 is that when a control signal is generated at pin R91, signals from pins P10-P13 and P20-P23 are applied to the seven LED indicators LED1-LED7. If no such control signal exists, the signals of P10-P13 and P20-P23 are applied to the display 7.

Key input controller 10 provides connections between the keys K1-K6 and the CPU. Once the keys K1-K6 are actuated, signals generated thereby are sent to the CPU.

The buzzer BZ provides an audio warning signal to the user. For example, the buzzer BZ may sound when the actuation of the keys K1-K6 are actually received by the CPU.

It is apparent that although the invention has been described in connection with the preferred embodiment, it is contemplated that those skilled in the art may make changes to the preferred embodiment without departing from the spirit and scope of the invention as defined in the appended claims.

## Claims

1. A food treating device comprising an outer housing fixed on a base, an inner housing disposed inside said outer housing and spaced therefrom to provide a space therebetween for air circulation, heater means mounted on said inner housing to provide a high temperature to said inner housing, a blower means which blows air into said outer housing from an opening formed on said outer housing to cause air circulation inside said outer housing, stirring means movably disposed inside said inner housing to stir food disposed inside said inner housing by being driven by driver means via transmission means and a control circuit which is provided to control operation of said food treating device, said control circuit comprising:
a central processing unit comprising at least a plurality of key input pins, a plurality of output pins, an analog signal input pin, a plurality of scanning signal output pins and an interrupt signal input pin;
a power supply means which receives alternating current from an external power source and applies direct current power to the control circuit of said device;
key input circuit means comprising a plurality of input keys respectively connected to the plurality of key input pins of said central processing unit;
temperature detector means comprising a thermal sensor to detect temperature inside said housings and apply an analog signal representing the detected temperature to the central processing unit via the analog signal input pin thereof;
driver controller means which receives a driver control signal from one of the plurality of output pins of said central processing unit to actuate said driver means to drive said stirring means via a Darlington circuit constituted by two transistors which controls a relay to control ON/OFF state of said driver;
heater controller means which receives a heater control signal from one of the plurality of output pins of said central processing unit to actuate said heater means to heat said housings and the food disposed inside said housings via a Darlington circuit constituted by two transistors which controls a relay to control ON/OFF state of said heater;
blower controller means which receives a blower control signal from one of the plurality of output pins of said central processing unit to actuate said blower means to drive air inside said housings to circulate via a circuit constituted by a transistor and a triac which triac controls said blower means directly;
interrupt signal generator means which provides an interrupt signal comprising a series of pulses of a frequency of the external alternating current power to the interrupt signal input pin of said central processing unit for synchronizing said central processing unit with said frequency;
display controller means which are connected to the plurality of scanning signal output pins of said central processing unit to receives display control signals therefrom and apply these control signals to display means;
display means which receives display signal from the output pins of said central processing unit to display message carried by the display signal on the display under the control of said display controller means; and
a plurality of indicators respectively connected to the corresponding output pins of said central processing unit to receive signal therefrom for indication of operation condition of said food treating device.

2. A food treating device as claimed in Claim 1, wherein said display means comprises a seven-segment display.

3. A food treating device as claimed in Claim 1, wherein said indicators comprise at least seven light emitting diodes respectively representing a food treating mode, including light bread baking, medium bread baking, dark bread baking, manual operation, cake baking, jam making and rice cooking.

4. A food treating device as claimed in Claim 1, wherein said input keys comprise at least a start/stop key for starting and stopping said food treating device, a mode selection key for setting operation mode, a timer control key for controlling a timer displayed by said display means, two clock controlling keys respectively controlling a hour message and a minute message to be displayed by said display means and an operation cancel key to cancel mis-entered operation selection.

5. A food treating device as claimed in Claim 4, further comprising a control panel with the display means, the indicators and the input keys arranged thereon.
